(19) Europäisches Patentamt
European Patent Office
Office européen des brevets

(11) EP 3 671 276 B1

(12) EUROPÄISCHE PATENTSCHRIFT

(45) Veröffentlichungstag und Bekanntmachung des Hinweises auf die Patenterteilung:
26.01.2022 Patentblatt 2022/04

(21) Anmeldenummer: 19210041.0

(22) Anmeldetag: 19.11.2019

(51) Internationale Patentklassifikation (IPC):
G01S 17/10 (2020.01)   G01S 17/48 (2006.01)
G01S 7/4863 (2020.01)   G01S 7/4865 (2020.01)
G01S 7/486 (2020.01)   G01S 7/487 (2006.01)

(52) Gemeinsame Patentklassifikation (CPC):
G01S 17/10; G01S 7/4863; G01S 7/4865;
G01S 7/4868; G01S 7/4876; G01S 17/48;
G01S 7/4802

(54) OPTOELEKTRONISCHER SENSOR UND VERFAHREN ZUR ERFASSUNG EINES OBJEKTS
OPTOELECTRONIC SENSOR AND METHOD FOR DETECTING AN OBJECT
CAPTEUR OPTOÉLECTRONIQUE ET PROCÉDÉ DE DÉTECTION D'UN OBJET

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 17.12.2018 DE 102018132473

(43) Veröffentlichungstag der Anmeldung:
24.06.2020 Patentblatt 2020/26

(73) Patentinhaber: SICK AG
79183 Waldkirch (DE)

(72) Erfinder:
• Waslowski, Kai
79183 Waldkirch (DE)
• Wiethege, Friedhelm
79350 Sexau (DE)

(56) Entgegenhaltungen:
EP-A1- 2 711 667        EP-A1- 3 388 865
WO-A1-2018/160886       US-A1- 2018 209 846

**Beschreibung**

Die Erfindung betrifft einen optoelektronischen Sensor und ein Verfahren zur Erfassung eines Objekts in einem Überwachungsbereich nach dem Oberbegriff von Anspruch 1 beziehungsweise 13.

Es gibt verschiedene Messprinzipien, um mit einem optoelektronischen Sensor den Abstand zu einem erfassten Objekt zu bestimmen. Lichtlaufzeitverfahren bestimmen die Laufzeit eines Lichtsignals, die über die Lichtgeschwindigkeit dem gesuchten Abstand entspricht. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Da die Lichtlaufzeiten extrem kurz sind, ist eine Abstandsauflösung im Bereich von Zentimetern oder gar Millimetern bereits eine große Herausforderung, und feinere Auflösungen sind zumindest bislang technisch kaum erreichbar. Dafür sind mit weitgehend gleicher Genauigkeit auch große Reichweiten möglich.

Bei einem Triangulationsverfahren liegen Lichtsender und Lichtempfänger in einem Basisabstand nebeneinander. Je nach Abstand des Objekts, welches das ausgesandte Licht zurückwirft, wird das Empfangslicht an einer anderen Position auf einem ortsaufgelösten Lichtempfänger registriert und der Auftreffort in den Abstand umgerechnet. Triangulation ist für große Abstände weniger geeignet, dafür im Nahbereich extrem präzise bis in den Mikrometerbereich. Die erzielbare Reichweite hängt natürlich vom konkreten Sensor und Parametern wie Sendeleistung auch unter Berücksichtigung von Augenschutz, Baugröße und damit Größe der Empfangslinse sowie dem Basisabstand ab, ist aber jedenfalls gegenüber Lichtlaufzeitverfahren deutlich beschränkt. Da weiterhin im Kern die Position eines Lichtflecks auf dem ortsaufgelösten Lichtempfänger gemessen wird, gibt es Störeinflüsse durch nicht ideale Randbedingungen, etwa spiegelnde oder glänzende Objekte sowie spiegelnde oder glänzende Umgebungen.

Der gemessene Abstand kann unmittelbar die Ausgabegröße des Sensors sein. Es gibt aber auch schaltende Systeme, die ein Objekt nur dann erfassen, wenn es sich in einem bestimmten Abstandsbereich befindet. Dazu zählen hintergrundausblendende Lichttaster, die Objekte ab einer bestimmten Entfernung ignorieren, und Lichtschranken, die den Abstand zum zugeordneten Reflektor überwachen.

Die Anforderungen an einen entfernungsmessenden optoelektronischen Sensor können sich je nach Anwendung und Umgebungsbedingungen erheblich unterscheiden. Der abzudeckende Dynamikbereich umfasst nahe und ferne Objekte, zudem unterschiedliche Remissionen etwa von glänzenden Flächen bis hinunter zu beispielsweise schwarzem Samt. Daher sind besonders geeignete Lichtempfänger Lawinenphotodioden, die im sogenannten Geiger-Modus betrieben werden (SPAD, Single Photon Avalanche Diode).

In einer SPAD wird eine Vorspannung oberhalb der Durchbruchspannung angelegt, und dann genügt bereits ein einziger, durch ein einzelnes Photon freigesetzter Ladungsträger zum Auslösen einer nicht mehr kontrollierten Lawine, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching). Eine Besonderheit von SPADs ist die Tatsache, dass auch ein minimales Störereignis, wie ein Fremdlichtphoton oder Dunkelrauschen, das gleiche maximale Empfangssignal erzeugt wie ein Nutzlichtsignal. Um diese Auswirkungen zu begrenzen, werden in der Praxis mehrere SPADs gemeinsam ausgewertet. Bezüglich dieser und weiterer allgemeiner Eigenschaften von SPADs sei beispielhaft auf den Artikel Eisele, Andreas, et al. "185 MHz count rate, 139 dB dynamic range singlephoton avalanche diode with active quenching circuit in 130 nm CMOS technology." Int. Image Sensor Workshop (IISW), Onuma, Hokkaido, 2011 verwiesen.

In dem Artikel Hallman, Lauri, et al. "On 2-D Rangefinding Using a~ 1 nJ/~ 100 ps Laser Diode Transmitter and a CMOS SPAD Matrix." IEEE Photonics Journal (2018) sowie in der WO 2017/17811 A1 werden jeweils eine Entfernungsmessung mittels Pulslaufzeitverfahren und einer SPAD-Matrix beschrieben.

Die DE 10 2011 005 740 A1 offenbart ebenfalls eine Messvorrichtung zur optischen Messung einer Entfernung mit einem Lichtlaufzeitverfahren und einer SPAD-Matrix. Es wird diskutiert, dass aufgrund des Triangulationseffekts der Empfangslichtfleck seitlich auswandert, und es werden Maßnahmen vorgeschlagen, dies zu korrigieren. Eine Abstandsmessung mittels Triangulation erfolgt aber nicht.

Die DE 10 2004 037 137 B4 befasst sich mit einem Verfahren zur Entfernungsmessung durch Bestimmung der Laufzeit und ein Triangulationsverfahren als weiteres optisches Verfahren zur Entfernungsmessung. Dabei sind jedoch keine SPADs vorgesehen und keine Maßnahmen getroffen, um mit deren Besonderheiten umzugehen.

Die EP 2 159 603 B1 diskutiert einen hintergrundausblendenden Lichttaster, der Lichtpulse aussendet und die Empfangssignale über verschiedene Zeitfenster integriert. Auch hierfür werden sind keine SPADs verwendet, und für derartige Integrationen würden sich deren praktisch binäre Signale mit Maximalausschlag nach Registrieren von Photonen auch nicht eignen.

In der DE 10 2004 042 466 A1 wird eine optische Distanzmessung mit einem Phasenverfahren vorgestellt. Es wird ein zusätzlicher Empfangspfad für ein Triangulationsverfahren geschaffen, was aber erheblichen apparativen Mehraufwand bedeutet.

Die EP 3 388 865 A1 offenbart einen Laserscanner mit mehreren Abtaststrahlen, die nach einem Lichtlaufzeitverfahren Abstände messen. Die Empfänger sind jeweils in ihrer Hauptfunktion einem bestimmten Abtaststrahl zugeordnet, können jedoch zusätzlich auch als Nahbereichsdetektor für einen anderen Abtaststrahl genutzt werden. Es wird zudem eine Ausführungsform vorgeschlagen, in der mit mehreren aktiven Empfängern die Position des Empfangslichtflecks bestimmt und daraus nach dem Triangulationsprinzip ein Abstand geschätzt wird.

In der WO2018/160886 A1 wird ein LiDAR-System mit SPADs beschrieben, das Histogramme bildet und auswertet.

Aus der US 2018/0209846 A1 ist ein SPAD-Detektor mit modulierter Empfindlichkeit bekannt. Dabei werden Lichtlaufzeitmessungen wiederholt, und es wird für die jeweiligen Pixel eine Verteilung der Lichtlaufzeiten in einem Histogramm erfasst.

Die EP 2 711 667 A1 beschreibt eine Vorrichtung zur Entfernungsmessung, die in einem Betriebsmodus eine Lichtlaufzeitmessung und in einem anderen Betriebsmodus eine Triangulationsmessung durchführt. Dazwischen wird bei einem Grenzabstand gewechselt. In einer Erweiterung wird ein Übergangsbereich zwischen zwei Grenzabständen geschaffen, in dem mit dem jeweiligen Verfahren gemessene Abstände kombiniert werden, vorzugsweise gewichtet je nachdem, wie nahe der Abstand jeweils an den beiden Grenzwerten liegt.

Es ist daher Aufgabe der Erfindung, einen optoelektronischen Sensor mit Abstandsmessung nach dem Lichtlaufzeitverfahren weiter zu verbessern.

Diese Aufgabe wird durch einen optoelektronischen Sensor und ein Verfahren zur Erfassung eines Objekts in einem Überwachungsbereich nach Anspruch 1 beziehungsweise 13 gelöst. Ein Lichtsender sendet einen Lichtpuls in den Überwachungsbereich aus, der von dem angetasteten Objekt zumindest teilweise zurückgeworfen wird und dann als remittierter Lichtpuls einen Empfangslichtfleck auf einem Lichtempfänger erzeugt. Als Lichtempfänger ist eine Zeilenanordnung von Lichtempfangselementen oder eine Pixelzeile eingesetzt. Jedes Lichtempfangselement oder Pixel wiederum weist eine oder mehrere Lawinenphotodiodenelemente auf, die jeweils mit einer Vorspannung oberhalb einer Durchbruchspannung vorspannbar und somit in einem Geiger-Modus betreibbar sind, oder anders ausgedrückt eine oder mehrere SPADs. Mehrere Lawinenphotodiodenelemente bilden vorzugsweise eine Spalte senkrecht zu der Zeilenanordnung. Eine Auswertungseinheit misst die Lichtlaufzeit mit Hilfe der Empfangssignale der Lawinenphotodiodenelemente und bestimmt daraus über die konstante Lichtgeschwindigkeit den Abstand zu dem Objekt.

Die Erfindung geht von dem Grundgedanken aus, zusätzlich zu der ersten Abstandsmessung mittels Lichtlaufzeitverfahren eine zweite Abstandsmessung mittels Triangulationsverfahren durchzuführen. Dazu wird der Auftreffort des remittierten Lichtpulses beziehungsweise die Lage des Empfangslichtflecks auf der Zeilenanordnung bestimmt und der gesuchte Abstand anhand der bekannten Sensorparameter berechnet, insbesondere dem Basisabstand zwischen Lichtsender und Lichtempfänger beziehungsweise deren Optiken.

Es sind verschiedene Sensortypen denkbar, wie in der Einleitung angeführt, welche auch die beiden Abstandsmessungen auf unterschiedliche Weise nutzen. Ein entfernungsmessender Lichttaster gibt beide Abstandswerte aus oder verrechnet sie zuvor zu einem gemeinsamen Abstandswert. Eine abstandsüberwachende Lichtschranke oder ein hintergrundausblendender Lichttaster erzeugt nach außen nur ein Schaltsignal je nach Anwesenheit des Objekts in einem bestimmten Abstandsbereich.

Die Erfindung hat den Vorteil, dass durch Kombination der beiden Entfernungsmessungen die Zuverlässigkeit und Robustheit der Entfernungsmessung und Anwesenheitserkennung verbessert wird. Das funktioniert auch mit den besonderen Signalen von SPADs, so dass deren Vorteile verwirklicht sind: hohe Empfindlichkeit mit Verstärkungsfaktoren bis zu $10^8$ sowie hohe Integrierbarkeit und geringe Kosten.

Die Steuer- und Auswertungseinheit ist bevorzugt dafür ausgebildet, Lichtlaufzeiten mehrfach durch Messwiederholung und/oder getrennte Auswertung der Empfangssignale zu messen. Messwiederholung bedeutet, dass ein weiterer Lichtpuls ausgesandt und wieder empfangen wird. Eine Mehrfachmessung entsteht alternativ oder zusätzlich durch Empfang eines remittierten Lichtpulses in mehreren Lawinenphotodiodenelementen und Mehrfachauswertung der Empfangssignale von einzelnen Lawinenphotodiodenelementen oder mehreren Gruppen davon. Auch ganz allgemein erhöht sich die Messgenauigkeit durch Mehrfachmessung, aber bei Lawinenphotodiodenelementen im Geiger-Modus ist das besonders vorteilhaft, weil Einzelmessungen auf ein Dunkel- oder Fremdlichtereignis zurückgehen können und damit nicht nur um eine gewisse Rauschtoleranz wie bei anderen Lichtempfangselementen abweichen, sondern gar nicht der gewünschten Lichtlaufzeit entsprechen.

Die Steuer- und Auswertungseinheit weist bevorzugt eine Vielzahl von Lichtlaufzeitmesseinheiten auf, die jeweils einem oder mehreren Lawinenphotodiodenelementen zugeordnet sind. Vorzugsweise ist jeweils eine Lichtlaufzeitmesseinheit je Lichtempfangselement vorgesehen. Sind mehrere Lawinenphotodiodenelemente derselben Lichtlaufzeitmesseinheit zugeordnet, so wird vorteilhafterweise eine zusammenfassende Logik dazwischengeschaltet, beispielsweise eine ODER-Logik, eine Summation oder eine Koinzidenzlogik, die zum Ausfiltern von vereinzelten Störereignissen nur dann reagiert, wenn eine Mindestanzahl Ereignisse in einem sehr engen Zeitfenster auftritt. Die Zuordnung der Lichtlaufzeitmesseinheiten kann fix oder variabel sein.

Im letzteren Fall wird beispielsweise ein bestimmter interessierender Bereich der Zeilen-anordnung ausgesucht, dessen Lawinenphotodiodenelemente mit einer Lichtlaufzeitmesseinheit verbunden wird, oder die Lawinenphotodiodenelemente werden mittels Multiplexing zeitversetzt ausgewertet.

Die Lichtlaufzeitmesseinheiten weisen bevorzugt einen TDC (Time-to-Digital Converter) auf. Das sind bewährte Bauteile, um Zeitmessungen durchzuführen und die praktisch als Stoppuhren arbeiten, die durch einen gemeinsamen Zeitbezug wie dem Sendezeitpunkt des Lichtpulses ausgelöst und durch die SPADs angehalten werden, oder umgekehrt durch die SPADs ausgelöst und einen festgelegten gemeinsamen Zeitbezug angehalten werden. Vorzugsweise sind die TDCs direkt bei den Pixeln oder Lichtempfangselementen oder zumindest auf demselben Chip implementiert.

Die Steuer- und Auswertungseinheit ist dafür ausgebildet, eine Vielzahl von gemessenen Lichtlaufzeiten in einem Histogramm zu akkumulieren, in dessen Bins gezählt wird, wie oft eine Lichtlaufzeit in einem bestimmten Lichtlaufzeitbereich gemessen wurde. Das Histogramm unterteilt den interessierenden Lichtlaufzeitbereich von Null bis zur maximalen Reichweite oder einen Teilbereich davon in vorzugsweise gleichmäßige Bins und zählt, wie oft eine jeweils in das Bin fallende Lichtlaufzeit gemessen wurde. Die Breite der Bins wird unter anderem anhand der gewünschten zeitlichen Auflösung und des vorhandenen Speichers gewählt. Die Vielzahl von Lichtlaufzeiten entsteht in der Zeit durch Messwiederholung mit jeweils einem weiteren ausgesandten Lichtpuls und/oder im Raum durch die Mehrfachauswertung unterschiedlicher Lawinenphotodiodenelementen beziehungsweise Gruppen davon. Mit einem Histogramm sind statistische Auswertungen der Mehrfachmessung zur Bestimmung einer genaueren Lichtlaufzeit einfach möglich.

Die Steuer- und Auswertungseinheit ist dafür ausgebildet, jeweils ein Histogramm für einen jeweiligen Bereich der Zeilenanordnung zu akkumulieren, insbesondere ein Histogramm je Lichtempfangselement. Damit steht eine über die Zeile ortsaufgelöste Information zur Verfügung. Diese Ortsauflösung wird im Weiteren genutzt, um die Lichtlaufzeitmessung mit geometrischen Informationen nach dem Prinzip der Triangulation zu plausibilisieren und genauer zu machen.

Die Steuer- und Auswertungseinheit ist bevorzugt dafür ausgebildet, in jedem Histogramm einen Abstandswert aus der Position des durch den remittierten Lichtpuls erzeugten lokalen Maximums zu bestimmen. Da mehrere Histogramme bereitstehen, kann die Lichtlaufzeit auch mehrfach redundant aus jedem dieser Histogramme gemessen werden, insbesondere einmal pro Lichtempfangselement. Ein lokales Maximum in einem Histogramm entsteht aus einer Häufung von einzelnen gemessenen Lichtlaufzeiten. Solche Häufungen gibt es in den Histogrammen, die Lichtempfangselementen zugeordnet sind, auf die tatsächlich der Empfangslichtfleck des remittierten Lichtpulses fällt. Innerhalb dieser Histogramme liegt das lokale Maximum bei Lichtlaufzeiten, die dem Abstand zu dem angetasteten Objekt entsprechen. Andere Lichtlaufzeiten werden aufgrund von Rauscheffekten gemessen, also Dunkel- oder Fremdlichtereignissen. Bei SPADs ergibt sich ein besonderes Hintergrund- oder Rauschverhalten mit exponentiellem Abfall. Das liegt daran, dass eine SPAD, in der eine Lawine ausgelöst wurde, für die übrige Messung wegen ihrer Totzeit nicht mehr verfügbar ist. Daher erzeugt der remittierte Lichtpuls nicht unbedingt ein globales, sondern nur ein lokales Maximum, denn gerade ein fernes Objekt erzeugt möglicherweise weniger Ereignisse als das Hintergrundlicht kurz nach Aussenden des Lichtpulses, wenn noch alle SPADs verfügbar sind. Das lokale Maximum wird auch Echopeak genannt.

Die Steuer- und Auswertungseinheit ist bevorzugt dafür ausgebildet, gemessene Lichtlaufzeiten aus Histogrammen beziehungsweise die Histogramme oder die daraus gewonnenen Informationen zu ignorieren, in denen kein lokales Maximum identifiziert werden kann. Es wird davon ausgegangen, dass in solchen Histogrammen nur Dunkel- und Hintergrundereignisse registriert wurden. Sie liegen außerhalb des Bereichs des Empfangslichtflecks auf der Zeilenanordnung, enthalten also gar keine Nutzlichtinformation und können weder zur Lichtlaufzeitmessung noch zur Triangulationsmessung sinnvoll beitragen.

Die Steuer- und Auswertungseinheit ist dafür ausgebildet, einen Empfangspegel je Histogramm zu bestimmen, insbesondere durch Integrieren des durch den remittierten Lichtpuls erzeugten lokalen Maximums oder durch dessen Höhe. Die Integration in einem Histogramm erfolgt in der Praxis diskret durch Aufaddieren der entsprechenden Bins. Über die so bestimmte Fläche des lokalen Maximums wird ermittelt, wie viele Nutzlichtereignisse zu dem lokalen Maximum beitragen, und das ist ein Maß für den Empfangspegel. Ein anderes einfaches Maß ist die Höhe des lokalen Maximums. Dabei wird vorzugsweise das Hintergrundlicht kompensiert. Gibt es kein lokales Maximum, dann handelt es sich um ein Histogramm, das nach dem Vorabsatz dem Hintergrund zuzurechnen ist, der Empfangspegel des Nutzlichts ist hier Null.

Die Steuer- und Auswertungseinheit ist dafür ausgebildet, den Auftreffort aus der Verteilung der Empfangspegel über die Histogramme zu bestimmen. Es wird also aus jedem Histogramm bestimmt, beispielsweise wie im vorigen Absatz beschrieben, wie stark der remittierte Lichtpuls in den zugeordneten Lawinenphotodiodenelementen registriert wurde, beispielsweise wie hoch der Echopeak ist oder welche Fläche er einnimmt. Das ergibt eine Ortsverteilung der Intensität des Empfangslichtflecks, aus der sich der Auftreffort beispielsweise als Schwerpunkt oder Median bestimmen lässt.

Die Steuer- und Auswertungseinheit ist bevorzugt dafür ausgebildet, die Auslösewahrscheinlichkeit der Lawinenphotodiodenelemente bei Empfang des remittierten Lichtpulses unterhalb einer Sättigung zu halten, insbesondere durch Anpassung der Sendeleistung des Lichtsenders oder der Empfindlichkeit der Lawinenphotodiodenelemente. Bei den hochempfindlichen SPADs kann es leicht geschehen, dass sämtliche von Nutzlicht getroffenen SPADs auslösen. Damit sind aber die Histogramme im Bereich des Empfangslichtflecks im Vollausschlag, eine Feinauswertung der Intensitätsverteilung ist nicht mehr möglich. Deshalb wird vorzugsweise dafür gesorgt, dass auch ein von dem remittierten Lichtpuls getroffenes Lawinenphotodiodenelement nur mit einer Wahrscheinlichkeit deutlich kleiner Eins auslöst. Dazu kann die Sendeleistung des Lichtsenders und/oder die Empfindlichkeit des Lichtempfängers angepasst werden. Letzteres ist beispielsweise durch Herabsetzen der Vorspannung auf einen Wert näher der Durchbruchspannung möglich, oder es sind Lawinenphotodiodenelemente mit unterschiedlich großer Fläche in einem Lichtempfangselement vorgesehen, die passend aktiviert werden.

Die Steuer- und Auswertungseinheit ist bevorzugt dafür ausgebildet, den exponentiell fallenden Hintergrundanteil eines Histogramms auszufiltern. Es wurde schon erläutert, dass bei SPADs der Hintergrund nicht im Mittel gleichförmig verläuft, sondern exponentiell abfällt. Nun lässt sich die Zeitkonstante des exponentiellen Abfalls aus den Histogrammen, in denen kein Nutzlicht empfangen wurde, beziehungsweise aus Abschnitten von Histogrammen außerhalb des lokalen Maximums bestimmen. Dieser Hintergrund kann dann abgezogen werden, wobei auch komplexere Filterungen vorstellbar sind. Gerade für die Triangulationsmessung ist das von Vorteil, weil die nach Kompensation des Hintergrunds verbleibende Intensitätsverteilung wirklich dem Nutzlicht entspricht.

Die Steuer- und Auswertungseinheit ist bevorzugt dafür ausgebildet, das Remissionsvermögen des Objekts zu bestimmen. Der Abstand des Objekts ist durch Lichtlaufzeitmessung und der Hintergrund beispielsweise nach der im Vorabsatz beschriebenen Schätzung bekannt. Daher lässt sich eine Erwartung an den Empfangspegel für einen festen Remissionsgrad von beispielsweise hundert Prozent formulieren, und aus der Abweichung des tatsächlichen Empfangspegels kann der Remissionsgrad des Objekts geschätzt werden.

Die Steuer- und Auswertungseinheit ist dafür ausgebildet, den Abstandsmessungen nur solche Histogramme und/oder Bereiche von Histogrammen zugrunde zu legen, bei denen durch erste Abstandsmessung anhand der Lichtlaufzeit und durch zweite Abstandsmessung mittels Triangulation bestimmte Abstände um höchstens eine Abstandstoleranz voneinander abweichen. Anders ausgedrückt sollen nur solche Ereignisse dem resultierenden Abstand zugrunde liegen, bei denen die erste Abstandsmessung mittels Lichtlaufzeitverfahren und die zweite Abstandsmessung mittels Triangulationsverfahren zueinander passen. Zu einem durch Lichtlaufzeitverfahren gemessenen Abstand gehört nach den geometrischen Zusammenhängen des Triangulationsverfahrens ein bestimmter Auftreffort auf der Zeilenanordnung. Eine korrekte Lichtlaufzeitmessung kann also nur in dem dort befindlichen Lichtempfangselement durchgeführt werden, ansonsten gibt es Störeffekte wie spiegelnde oder glänzende Objekte oder eine Umspiegelung. Tatsächlich gibt es wegen der endlichen Ausdehnung des Lichtflecks und Toleranzen in der Regel nicht nur ein Lichtempfangselement, bei dem Auftreffort und Abstand aus dem Lichtlaufzeitverfahren übereinstimmen, sondern mehrere davon, und deshalb wird eine Abstandstoleranz zugelassen.

Es gibt verschiedene Arten von Ereignissen oder gemessenen Lichtlaufzeiten, die alle oder teilweise nach dieser Plausibilitätsbetrachtung zwischen Lichtlaufzeit- und Triangulationsverfahren unberücksichtigt bleiben. Zunächst sind das ganze Histogramme von Lichtempfangselementen, in denen zwar Nutzlicht registriert wurde, wo aber die mit Lichtlaufzeit gemessenen Abstände nicht zum Auftreffort passen. Außerdem gibt es innerhalb der Histogramme einen Bereich entsprechend der Abstandstoleranz um den mittels Lichtlaufzeit gemessenen Abstand herum, außerhalb dessen die einzelnen gemessenen Lichtlaufzeiten Dunkel- oder Hintergrundereignisse sein müssen. Es ist denkbar, eine erste Vorauswertung vorzunehmen, um die insgesamt resultierende Lichtlaufzeit erst einmal nur zu schätzen. Dann werden mit diesem Wissen die relevanten Histogramme und/oder Bereiche innerhalb der Histogramme ausgewählt. Die einzelnen gemessenen Lichtlaufzeiten, die diese Kriterien erfüllen, werden dann für die endgültige erste Abstandsmessung verwendet.

Die Abstandstoleranz ist bevorzugt aus der erwarteten Breite des von dem remittierten Lichtpuls auf der Zeilenanordnung erzeugten Empfangslichtflecks bestimmt. Der Empfangslichtfleck ist umso größer, je näher sich das Objekt befindet. Die Breite des Empfangslichtflecks lässt sich nach den Gesetzen der Triangulation aus den geometrischen Sensorparametern, also insbesondere Basisabstand und optische Parameter der Sende- und Empfangsoptik, und dem gemessenen Abstand des Objekts vorhersagen. Damit wird eine variable Abstandstoleranz abgeleitet, die den tatsächlichen Gegebenheiten entspricht und besonders genaue Messungen erlaubt. Es ist auch anhand der Empfangspegel in den einzelnen Histogrammen feststellbar, wenn die Geometrie des Empfangslichtflecks nicht der Erwartung entspricht, was dann Verzerrungen durch glänzende oder spiegelnde Flächen des Objekts oder der Umgebung vermuten lässt. Hier kann eine Warnung ausgegeben oder beispielsweise die dagegen robustere Lichtlaufzeitmessung übergewichtet werden.

Die Steuer- und Auswertungseinheit ist bevorzugt dafür ausgebildet, im Fernbereich die erste Abstandsmessung und im Nahbereich die zweite Abstandsmessung stärker zu gewichten. Im Nahbereich ergibt eine Abstandsänderung eine besonders große, im Fernbereich nur noch eine geringfügige Veränderung des Auftreffpunkts. Umgekehrt ist mit einem Lichtlaufzeitverfahren zwar nah wie fern eine ähnliche Präzision erreichbar, diese aber durch die extrem kurzen zu erfassenden Zeitunterschiede begrenzt. Daher eignet sich die Messung mittels Triangulation besonders im Nahbereich und mittels Lichtlaufzeit besonders im Fernbereich. Der Umschaltpunkt lässt sich vorab ermitteln. Es ist auch denkbar, beide Abstandsmessungen entsprechend gewichtet miteinander zu verrechnen, also statt eines harten Umschaltpunkts einen weichen Übergang zu schaffen.

Die Steuer- und Auswertungseinheit ist bevorzugt dafür ausgebildet, die Lawinenphotodiodenelemente nur während eines Zeitintervalls ab Aussenden des Lichtpulses zu aktivieren. Das wird auch als Gating bezeichnet. Damit wird verhindert, dass Ereignisse überhaupt erfasst werden, die mit der eigentlichen Messung nichts zu tun haben. Das würde womöglich SPADs vor der Messung in die Totzeit versetzen und jedenfalls unnötig die Stromaufnahme erhöhen. Der aktive Zeitraum des Gatings beginnt beispielsweise mit dem Aussenden des Lichtpulses und endet nach der doppelten Lichtlaufzeit bis zur maximalen Reichweite. Eine Verzögerung nach dem Aussenden des Lichtpulses ist denkbar, führt aber zu einem gewissen Blindbereich bei extrem nahen Abständen. Allgemein sind engere Gatingfenster beispielsweise entsprechend einem interessierenden, erwarteten oder zuvor gemessenen Abstands des Objekts denkbar. SPADs lassen sich sehr einfach durch Herabsetzen der Vorspannung unter die Durchbruchspannung beziehungsweise Heraussetzen der Vorspannung über die Durchbruchspannung aktivieren und deaktivieren.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1 eine schematische Blockdarstellung eines optoelektronischen Sensors;

Fig. 2 eine detailliertere Darstellung des Empfangssystems des Sensors gemäß Figur 1;

Fig. 3 eine detailliertere Darstellung eines einzelnen Lichtempfangselements und dessen Auswertungspfades;

Fig. 4 ein beispielhaftes Histogramm, dass die Häufigkeiten der in Messwiederholung und/oder mehreren Lichtempfangselementen gemessenen Lichtlaufzeiten akkumuliert;

Fig. 5 eine Darstellung einer Empfängerzeile mit für jedes von deren Lichtempfangselementen erzeugten Histogrammen;

Fig. 6 eine schematische Darstellung der Lichtwege eines optoelektronischen Sensors bei Mehrfachausbreitung beziehungsweise Umspiegelung;

Fig. 7 eine Darstellung eines Histogramms mit einem aus geometrischen Überlegungen festgelegten zulässigen Abstandsbereich;

Fig. 8 eine Darstellung ähnlich Figur 5, jedoch mit zwei Lichtflecken, von denen einer als gemäß dem Triangulationsverfahren unplausibel ausgeschlossen wird;

Fig. 9 eine vergleichende Darstellung der Auflösung von Lichtlaufzeit- und Triangulationsverfahren im Nah- und Fernbereich;

Fig. 10 eine schematische Darstellung einer Filterung, um den Empfangspegel des Nutzlichts in einem Lichtempfangselement zu bestimmen;

Fig. 11 eine Darstellung der Verteilung der Empfangspegel des Nutzlichts über den Empfangslichtfleck;

Fig. 12 eine weitere Darstellung der Verteilung der Empfangspegel des Nutzlichts über den Empfangslichtfleck bei klassischen Lichtempfangselementen und bei SPADs; und

Fig. 13 ein beispielhaftes Ablaufdiagramm, um mit SPADs und einem Triangulationsverfahren Abstände zu messen und dabei Hintergrundeinflüsse zu kompensieren.

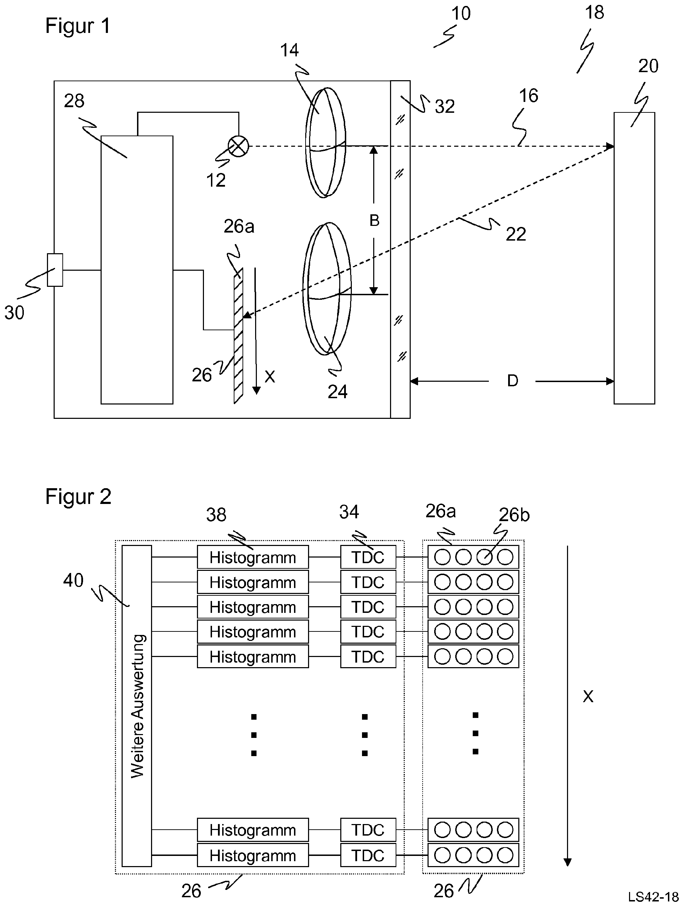

Figur 1 zeigt eine vereinfachte schematische Blockdarstellung eines optoelektronischen Sensors 10 in einer Ausführungsform als Lichttaster. Ein Lichtsender 12, beispielsweise eine LED oder eine Laserlichtquelle in Form eines Kantenemitters oder einer VCSEL, sendet durch eine Sendeoptik 14 einen Lichtpuls 16 in einen Überwachungsbereich 18 aus. Der Lichtsender 12 und die Sendeoptik 14 erzeugen einen runden oder einen länglichen Strahlquerschnitt, wobei im Falle eines länglichen Strahlquerschnitts die Längsrichtung vorzugsweise senkrecht zur Papierebene liegt.

Trifft der Lichtpuls 16 auf ein Objekt 20, so wird ein Teil des Lichtpulses 16 remittiert oder reflektiert und kehrt als remittierter Lichtpuls 22 durch eine Empfangsoptik 24 zu einem Lichtempfänger 26 zurück. Sendeoptik 14 und Empfangsoptik 24 sind im Basisabstand B zueinander angeordnet. Der Lichtempfänger 26 weist eine Vielzahl von Lichtempfangselementen 26a auf, die zu einer Zeile angeordnet sind, wobei mit X die Richtung längs der Zeile bezeichnet ist. Der zeilenförmige Lichtempfänger 26 kann insbesondere in der Scheimpflug-Anordnung ausgerichtet sein. Jedes Lichtempfangselement 26a wiederum umfasst mindestens ein im Geigermodus betriebenes Lawinenphotodiodenelement (SPAD, Single Photon Avalanche Diode).

Die Empfangssignale der Lichtempfangselemente 26a beziehungsweise von deren Lawinenphotodiodenelementen werden von einer Steuer- und Auswertungseinheit 28 ausgelesen und dort ausgewertet, um den Abstand D zu dem Objekt 20 zu messen. Dazu verwendet die Steuer- und Auswertungseinheit 28 einerseits ein Lichtlaufzeitverfahren, in dem die Lichtlaufzeit vom Aussenden des Lichtpulses 16 bis zum Empfang des remittierten Lichtpulses 22 ermittelt und bei Bedarf über die Lichtgeschwindigkeit in den Abstand D umgerechnet wird. Zudem wird auch der Auftreffort des remittierten Lichtpulses 22 beziehungsweise des davon erzeugten Empfangslichtflecks auf dem zeilenförmigen Lichtempfänger 26 und daraus mittels Triangulation der Abstand D ein weiteres Mal bestimmt. Die beiden Abstandsmessungen mittels Lichtlaufzeitmessung und Triangulationsmessung werden später unter Bezugnahme auf die weiteren Figuren noch näher erläutert.

Je nach Ausführungsform des Sensors 10 werden an einem Ausgang 30 beide mittels Lichtlaufzeitverfahren und Triangulationsverfahren bestimmte Abstände, ein daraus berechneter resultierender Abstand oder nur ein binäres Schaltsignal je nach An- oder Abwesenheit des Objekte 20 in einem bestimmten Abstandsbereich ausgegeben.

Der Sensor 10 weist in einer praktischen Ausführungsform weitere Elemente auf, die hier vereinfachend nicht weiter beschrieben werden, wie weitere Schnittstellen zur Parametrierung und dergleichen. Die Auftrennung in Lichtempfänger 26 und Steuer- und Auswertungseinheit 28 in Figur 1 ist auch in der Praxis denkbar, dient aber in erster Linie der Erläuterung. Vorzugsweise werden diese Elemente zumindest teilweise auf einem gemeinsamen Chip integriert, dessen Fläche sich lichtempfindliche Bereiche der Lawinenphotodiodenelemente und einzelne oder Gruppen von Lawinenphotodiodenelementen zugeordnete Schaltkreise zu deren Auswertung und Ansteuerung teilen. Sämtliche Bauteile können kompakt in einem Sensor 10 und insbesondere in einem Gehäuse untergebracht werden, das im Durchtrittsbereich der Lichtpulse 16, 22 durch eine Frontscheibe 32 abgeschlossen ist. In Figur 1 ist die Außenfläche der Frontscheibe 32 der Bezugspunkt für den gemessenen Abstand D, hier lässt sich natürlich auch durch entsprechende Umrechnung ein anderer Nullpunkt definieren.

Der Grundaufbau gemäß Figur 1 ist nur schematisch und beispielhaft zu verstehen. Es gibt auch andere erfindungsgemäße Ausführungsformen optoelektronischer Sensoren, die insbesondere jedem von Triangulationstastern oder hintergrundausblendenden Lichttastern an sich bekannten Aufbau entsprechen können. Weiter denkbar sind Laserscanner, in denen ein optischer Messkopf entsprechend Figur 1 rotiert oder verschwenkt wird.

Figur 2 zeigt weitere Details des Lichtempfängers 26 und der Auswertungseinheit 28. Der zeilenförmige Lichtempfänger 26 weist als Pixel die Lichtempfangselemente 26a auf. Die Lichtempfangselemente 26a selbst umfassen Unterpixel, nämlich eine Spalte von mehreren Lawinenphotodiodenelementen 26b im Geigermodus in einer Anordnung senkrecht zur Zeilenrichtung. Alternativ sind die Lawinenphotodiodenelemente 26b innerhalb des Lichtempfangselements 26a anders angeordnet oder weisen unterschiedliche Flächen auf. Auch Ausführungsformen mit nur je einem Lawinenphotodiodenelement 26b je Lichtempfangselement 26a sind möglich. Die Lawinenphotodiodenelemente 26b sind vorzugsweise individuell abschaltbar, besonders einfach dadurch, dass die Vorspannung unter die Durchbruchspannung abgesenkt wird.

Die Lawinenphotodiodenelemente 26b eines Lichtempfangselements 26a sind mit jeweils einem TDC 34 (Time-to-Digital Converter) verbunden, wobei die TDCs 34 als Lichtlaufzeitmesseinheiten fungieren. Ein Lawinenereignis in einem Lawinenphotodiodenelement 26b stoppt den TDC 34. Damit wird die Zeit ab einem vorgegebenen Trigger gemessen, beispielsweise dem Sendezeitpunkt des Lichtpulses 16. Alternativ starten die Lawinenphotodiodenelemente 26b den TDC 34, der mit einem vorgegebenen Trigger wieder stoppt. Konstante Zeiten können anschließend herausgerechnet werden, um D auf einen bestimmten Ort wie die Frontscheibe 32 zu beziehen.

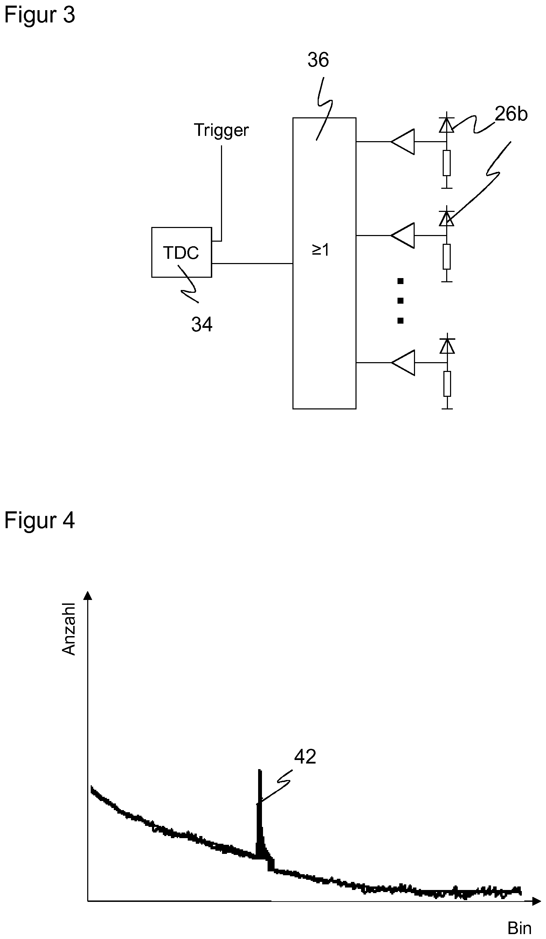

Figur 3 stellt die Verbindung zu einem TDC 34 für die Lawinenphotodiodenelemente 26b eines einzelnen Lichtempfangselements 26a noch einmal genauer dar. Zwischen den zugeordneten Lawinenphotodiodenelementen 26b und dem TDC 34 ist bevorzugt noch eine Zusammenfassungslogik 36 angeordnet. Das ist im einfachsten Fall eine ODER-Verknüpfung, womit dann das erste Ereignis in einem der zugeordneten Lawinenphotodiodenelemente 26b der Auslöser des TDCs ist. Andere Zusammenfassungslogiken 36 verlangen, dass mindestens m aus n Lawinenphotodiodenelemente 26b auslösen, oder dass sie mit einer als Koinzidenzdetektor ausgebildeten Zusammenfassungslogik 36 innerhalb eines bestimmten engen Zeitfensters gemeinsam auslösen.

Es ist denkbar, die Lawinenphotodiodenelemente 26b nur zu bestimmten Phasen der Messung einzuschalten, insbesondere mit dem Sendezeitpunkt des Lichtpulses 16 einund spätestens nach einer Dauer entsprechend der maximalen Reichweite wieder auszuschalten. Dazu wird vorteilhaft nur während der aktiven Phasen eine Vorspannung über der Durchbruchspannung angelegt. Dieser als Gating bezeichnete Vorgang hat den Vorteil, dass die Lawinenphotodiodenelemente 26b erst im relevanten Messzeitfenster auslösen können, so dass die Auslösewahrscheinlichkeit durch Hintergrundlicht stark reduziert wird und die Lawinenphotodiodenelemente 26b sich nicht schon zu Beginn der Messung in ihrer Totzeit befinden. Zusätzlich zu der verbesserten Hintergrundfestigkeit reduziert dies auch die Leistungsaufnahme.

Alternativ zu einer Zuordnung je eines TDCs 34 pro Lichtempfangselement 26a sind auch mehrere TDCs 34 bis hin zu je einem TDC 34 pro Lawinenphotodiodenelement 26b denkbar. Das erhöht den Schaltungsaufwand, ergibt dafür aber auch mehr Messereignisse. Umgekehrt können es auch weniger TDCs 34 sein, unter Verlust an Auflösung, mit Auswahl eines interessierenden Teilbereichs der Zeilenanordnung oder durch sequentielles Auswertung beziehungsweise Multiplexing.

Die von dem TDC 34 bestimmten einzelnen Lichtlaufzeiten werden in einem Histogramm 38 gesammelt, das den relevanten Abstandsbereich in Bins unterteilt und die Häufigkeit der jeweils in ein Bin fallenden einzelnen Lichtlaufzeiten zählt. Mehrere einzelne gemessene Lichtlaufzeiten entstehen durch Messwiederholung, also das Aussenden und Empfangen weiterer Lichtpulse 16, 22 und/oder dadurch, dass in Abweichung der Eins-zu-Eins-Zuordnung von Figur 2 mehrere TDCs 34 gemeinsam einem Histogramm 38, insbesondere anders als in Figur 3 mehrere TDCs 34 den Lawinenphotodiodenelementen 26b desselben Lichtempfangselements 26a zugeordnet sind.

Das Histogramm 38 belegt beispielsweise einen RAM-Bereich mit jeweils einem Speicherplatz je Bin des Histogramms. Die Histogramme 38 werden dann in einer weiteren Auswertung 40 ausgelesen und verarbeitet. In einer vorteilhaften Aufteilung sind die Lichtempfangselemente 26a, die TDCs 34 und die Speicherbereiche der Histogramme 38 auf einem gemeinsam ASIC untergebracht, während die weitere Auswertung 40 ein Mikroprozessor übernimmt. Eine Implementierung auf mehr oder weniger und auch anderen Auswertungsbausteinen ist aber ebenso denkbar.

Figur 4 zeigt ein beispielhaftes Histogramm. Auf der X-Achse sind die Bins aufgetragen, was einer Diskretisierung der Zeitachse entspricht. Auf der Y-Achse werden einzelne gemessene Lichtlaufzeiten je Bin gezählt. Jedes in dem Histogramm gezählte Ereignis ist also eine einzelne von einem TDC 34 gemessene Lichtlaufzeit. Das darf nicht mit der Lichtlaufzeit verwechselt werden, die insgesamt von dem Sensor 10 gemessen wird, um den Abstand D zu bestimmen und die als ein Ergebnis der Histogrammauswertung gesucht wird.

Das Histogramm zeigt den für SPADs typischen unterliegenden, exponentiell abfallenden Hintergrund, der außerdem in sich verrauscht ist. Dieses Verhalten resultiert aus den Totzeiten: Wird eine SPAD ausgelöst, sei es durch ein Dunkelereignis, durch Hintergrundlicht oder durch Nutzlicht des remittierten Lichtpulses 22, so steht sie für die weitere Einzelmessung nicht mehr zur Verfügung (Pile-Up-Effekt). Das gesuchte Messergebnis ist das lokale Maximum 42, auch als Echopeak bezeichnet, wo sich die aus dem Nutzlicht gemessenen einzelnen Lichtlaufzeiten häufen. Hinter dem lokalen Maximum 42 gibt es einen Sprung in der abfallenden Exponentialfunktion, weil eine größere Teilpopulation der SPADs durch den Echopeak in die Totzeit versetzt wird. Es ist durchaus vorstellbar, dass das lokale Maximum 42 kleiner ausfällt als der Hintergrund zu Beginn der Einzelmessung, weil beim Eintreffen des remittierten Lichtpulses 22 bei stärkerer Hintergrundbelastung längst nicht mehr alle Lawinenphotodiodenelemente 26b zur Verfügung stehen.

Die weitere Auswertung 40 kann dem Histogramm und dessen lokalem Maximum 42 zwei wichtige Messinformationen entnehmen: Aus dessen Lage lässt sich die Lichtlaufzeit bestimmen, und dessen Fläche ist ein Maß für den Empfangspegel, der wiederum für die Triangulation genutzt werden kann.

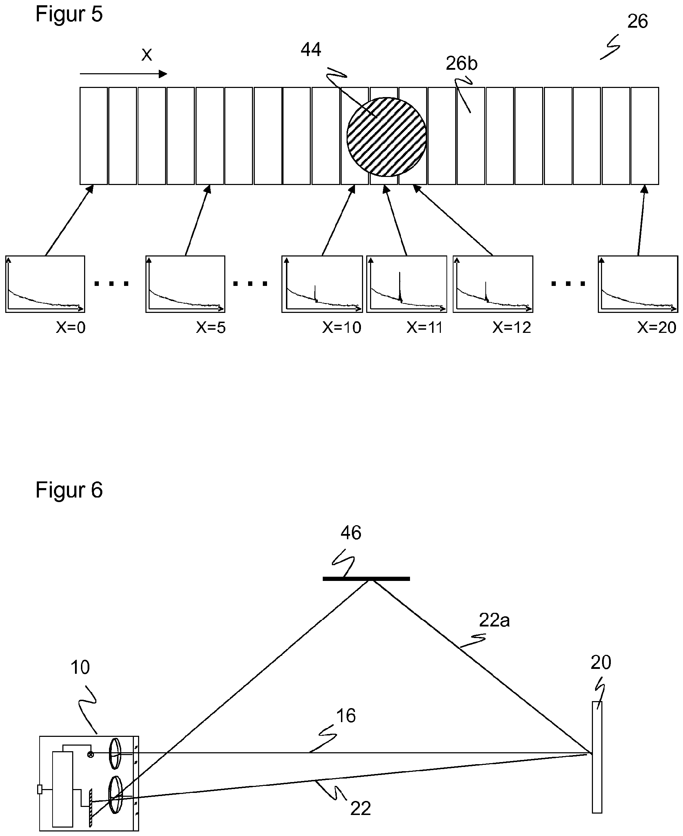

Figur 5 zeigt nochmals die Zeilenanordnung der Lichtempfangselemente 26a des Lichtempfängers 26a, wobei die einzelnen Lawinenphotodiodenelemente 26b der Einfachheit halber weggelassen sind. Vorzugsweise wird je ein Histogramm wie in Figur 4 pro Lichtempfangselement 26a erzeugt und ausgewertet. Das ist unterhalb des Lichtempfängers für einige der Lichtempfangselemente 26a dargestellt. Dabei bezeichnet weiterhin X die Richtung längs der Zeilenanordnung, und dementsprechend sind die Histogramme nummeriert. Diese Nummer oder Identität des jeweiligen Histogramms enthält also die geometrische Information oder Ortsauflösung, wo längs der Zeilenanordnung das Histogramm aufgezeichnet wurde. Darüber liefert jedes der Histogramme Informationen über den Ort des Empfangslichtflecks 44, den der remittierte Lichtpuls 22 auf dem Lichtempfänger 26 erzeugt. Der Empfangslichtfleck 44 liegt nämlich dort, wo in den Histogrammen ein lokales Maximum 42 ausfindig zu machen ist. Außerdem kann über die Lage des lokalen Maximums 42 aus jedem Histogramm der Abstandswert D geschätzt werden, und die Anzahl der zu dem lokalen Maximum 42 beitragenden Ereignisse, also die Fläche des lokalen Maximums 42, ist ein Maß für den Empfangspegel oder die Intensität des Empfangslichtflecks 44 an dem Ort auf der Zeilenanordnung, der dem Histogramm entspricht. Darüber hinaus enthält jedes Histogramm Hintergrundinformation.

In dem Beispiel der Figur 5 sind die Histogramme 10 bis 12 diejenigen, die Nutzlichtinformation des Empfangslichtflecks 44 enthalten. Die übrigen Histogramme zeigen nur Hintergrundlicht und können außer zu dessen Schätzung ignoriert werden. Jedes der Histogramme 10 bis 12 ermöglicht über die Lage des lokalen Maximums 42 eine robuste Lichtlaufzeitmessung, wobei die jeweiligen Schätzungen für D beispielsweise gemittelt werden können, insbesondere gemittelt mit dem jeweils bestimmten Empfangspegel. Es ist auch möglich, die Einzelereignisse zu einem gemeinsamen Histogramm zusammenzufügen und dieses auszuwerten.

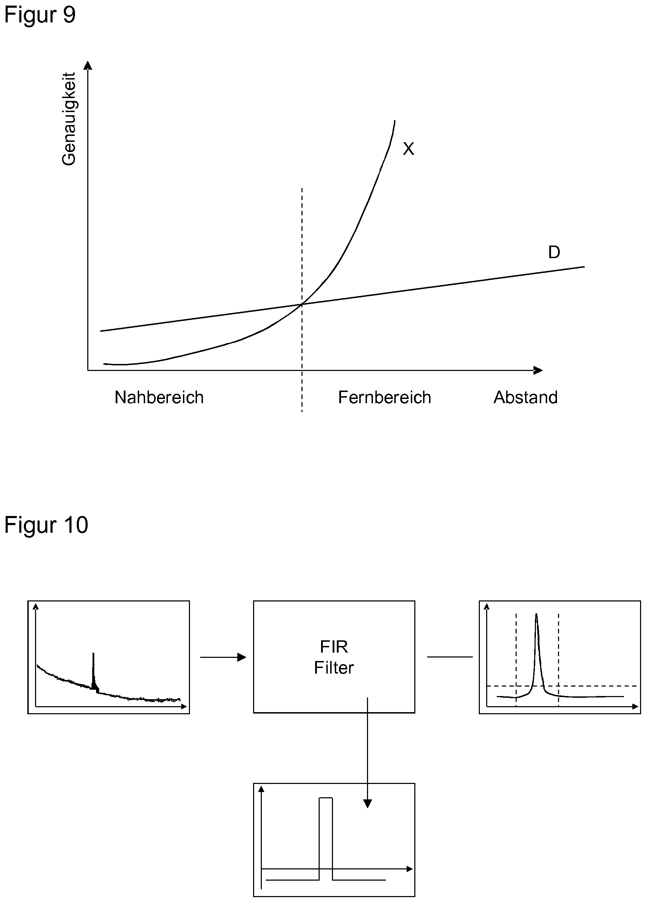

Außerdem ist die Identität der Histogramme, also deren Nummern 10 bis 12, eine Information über den Auftreffort des Empfangslichtflecks 44, die einer Triangulation zugrunde gelegt werden kann. Soweit ist das noch eine recht grobe Triangulation, die später unter Bezugnahme auf die Figuren 10 bis 13 deutlich verfeinert wird, aber das Prinzip ist auch hier schon verständlich. Das Wandern des Empfangslichtflecks 44 längs der Zeilenanordnung folgt in erster Näherung der Gleichung

$x = \dfrac{F \cdot B}{TW}$ , wobei X die Position auf dem zeilenförmigen Lichtempfänger 26, im Beispiel also X=11 des mittleren Histogramms mit lokalem Maximum 42, F die Brennweite der Empfangsoptik 24, B der Basisabstand zwischen Sendeoptik 14 und Empfangsoptik 24 und TW die gesuchte Tastweite, also der mittels Triangulation bestimmte Abstand ist.

Figur 6 zeigt einen herkömmlich problematischen Fall von Mehrfachausbreitung des Lichtpulses 16, 22 oder Umspiegelung. Dabei kehrt nicht nur ein remittierter Lichtpuls 22 auf direktem Weg zurück, sondern ein weiterer Lichtpuls 22a nimmt den Umweg über einen Spiegel 46. Bei dem Spiegel 46 kann es sich auch um eine glänzende Fläche beispielsweise aus Metall handeln, die in industriellen Umgebungen des Sensors 10 häufig vorkommt.

Durch Umspiegelung entstehen auf dem Lichtempfänger 26 mehrere Empfangslichtflecken, und weder mit Lichtlaufzeit noch Triangulation allein wird der richtige Abstand D gemessen. Durch die erfindungsgemäße Abstandsmessung sowohl mittels Lichtlaufzeit als auch Triangulation können aber nicht plausible Empfangslichtflecken aussortiert werden. Ähnliche Effekte wie durch Umspiegelung in Figur 6 entstehen bei glänzenden oder spiegelnden Flächen des Objekts 20.

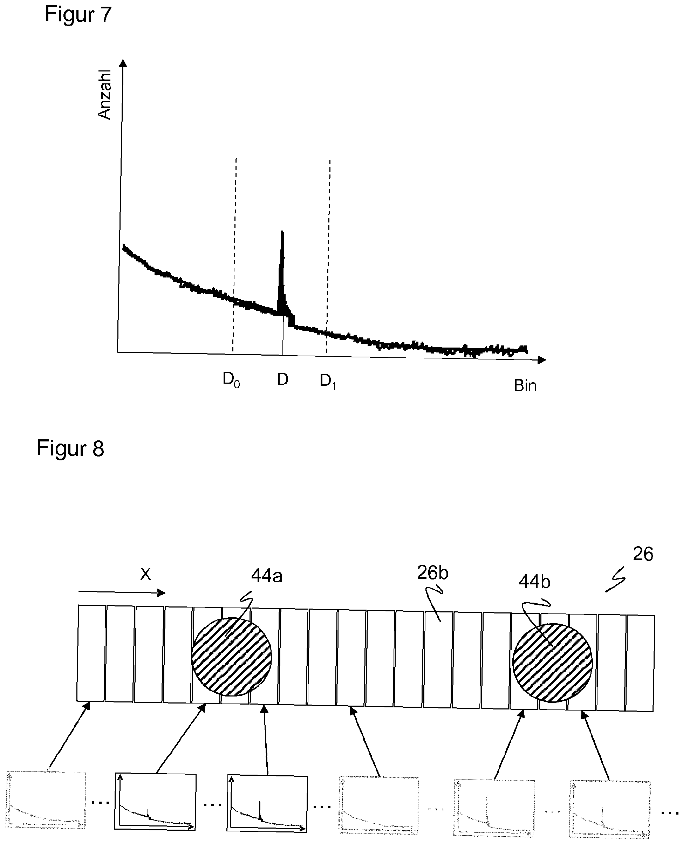

Figur 7 erläutert diese gegenseitige Plausibilisierung von Lichtlaufzeitmessung und Triangulationsmessung. Wenn ein Histogramm eines Lichtempfangselements 26a am Ort X ein hinreichend starkes Echo, also ausgeprägtes lokales Maximum 42, mit der zugehörigen Distanz D aufweist, dann muss zusätzlich $x = F\,B / D$ gelten, d.h. die durch die Lichtlaufzeit ermittelte Distanz D und für die Triangulation ermittelte Lichtfleckposition X müssen über Brennweite F und Basisabstand B in korrekter Beziehung zueinander stehen.

Durch die Ausdehnung des Empfangslichtflecks 44, durch Toleranzen und Rauschen ergibt sich ein zulässiger Bereich innerhalb einer Abstandstoleranz von Abstandswerten $D_0$ bis $D_1$ in einem bestimmten Histogramm X. $D_0$ und $D_1$ korrespondieren direkt über die Gleichung der Lichtlaufzeit $T = 2\,D / c$ mit den Zeitpunkten des Gatings. Die Bereiche des Histogramms außerhalb des zulässigen Bereichs, also einzelne Lichtlaufzeiten entsprechend $D < D_0$ oder $D > D_1$ werden in der Berechnung des Entfernungswertes zum Objekt 20 beziehungsweise in der Anwesenheitserkennung zur Ausgabe eines Schaltsignals ignoriert.

Figur 8 zeigt eine andere Betrachtung der gegenseitigen Plausibilisierung, die aber auch zusätzlich herangezogen werden kann. Dabei werden nicht Teile eines Histogramms, sondern ganze Histogramme ignoriert. Wie zu Figur 6 erläutert, kann es durch Mehrwegeausbreitung mehrere Empfangslichtflecken 44a-b geben. Der Empfangslichtfleck 44b liegt nach den geometrischen Gesetzmäßigkeiten der Triangulation scheinbar im Nahbereich, zugleich aber die Lichtlaufzeit sehr deutlich im Fernbereich, da der Lichtpuls 22a den Umweg über den Spiegel 46 zurückgelegt hat. Das passt nicht zueinander, dieser Empfangslichtfleck 44b und die zugehörigen Histogramme werden ignoriert. Deshalb sind die entsprechenden Histogramme ebenso wie diejenigen, die nur Hintergrund enthalten, in Figur 8 ausgegraut. Es werden also nur die zum anderen Empfangslichtfleck 44a gehörigen Histogramme weiter berücksichtigt, bei denen Auftreffort auf der Zeilenanordnung des Lichtempfängers 26 und Lichtlaufzeit plausibel sind. Entsprechend kommt es bei einer Anwesenheitsdetektion auch nicht zu einer Fehlschaltung wegen des vermeintlich laut Lichtlaufzeitmessung zu fernen oder laut Triangulationsmessung zu nahen Objekts 20.

Figur 9 zeigt schematisch die Auflösung oder Genauigkeit der Abstandsmessung mittels Lichtlaufzeitverfahren (D) und mittels Triangulation (X) im Vergleich. Der genaue Verlauf ist von vielen Parametern abhängig, aber das prinzipielle Verhalten ist aus Figur 9 ablesbar.

Die Änderung des Auftrefforts ist invers proportional zum Quadrat des Abstands des Objekts. Die Änderung ist damit bei nahen Objekten groß und geht für größere Abstände zügig gegen Null. Triangulation ist also im Nahbereich genau, im Fernbereich nicht. Die entsprechende Änderung der Lichtlaufzeit bleibt dagegen für jeden Abstand proportional zur Änderung des Abstands. Allerdings ist die Genauigkeit nach dem aktuellen Stand der Technik auf mehrere Millimeter bis Zentimeter begrenzt, so dass Lichtlaufzeitmessung im Nahbereich nicht die Präzision der Triangulation erreicht.

Erfindungsgemäß stehen beide Abstandsinformationen zur Verfügung, und es kann die jeweils genauere verwendet werden, also die Triangulation im Nahbereich und die Lichtlaufzeit im Fernbereich. In Figur 9 ist eine scharfe Grenze zwischen Nah- und Fernbereich eingezeichnet. Dieser Punkt kann für einen bestimmten Sensor 10 tatsächlich festgelegt sein, aber ebenso ist denkbar, einen weicheren Übergang zu schaffen, indem beide Abstandsinformationen geeignet mit dem Abstand gewichtet gemittelt werden.

Bei sehr inhomogenen oder teilweise spiegelnden beziehungsweise glänzenden Objekten 20 kann es sinnvoll sein, auch im Nahbereich nur den Abstandswert der Lichtlaufzeitmessung zu verwenden. Solche Objekte 20 können nämlich den Empfangslichtfleck 44 verzerren und damit die Triangulation verfälschen. Die weitere Auswertung 40 hat eine Erwartung der Intensitätsverteilung des Empfangslichtflecks 44 und kann diese Situation folglich selbst erkennen.

Wegen der besonderen Natur von SPADs sind bei der Triangulationsmessung vorzugsweise besondere weitere Maßnahmen zu beachten. Bei Übersteuerung zeigen SPADs einen starken Kompressionseffekt, und dessen negativer Effekt auf die Triangulationsmessung soll kompensiert werden.

Figur 10 zeigt links noch einmal ein Histogramm, wobei in der Fläche des lokalen Maximums 42 oder in dessen Höhe die für die Triangulation benötigte Empfangspegelinformation steckt. Eine Möglichkeit, die Intensität des lokalen Maximums 42 zu schätzen, nutzt eine Faltung mit einem FIR-Filter, um den vom Hintergrundlicht erzeugten Signalanteil aus dem Histogramm zu entfernen. Über einen Schwellwert und das schon diskutierte, durch $D_0$ und $D_1$ begrenzte Fenster wird die Position der steigenden Flanke des lokalen Maximums 42 und dessen Höhe L(x) ermittelt. Alternativ wird das lokale Maximum 42 in dem Fenster integriert.

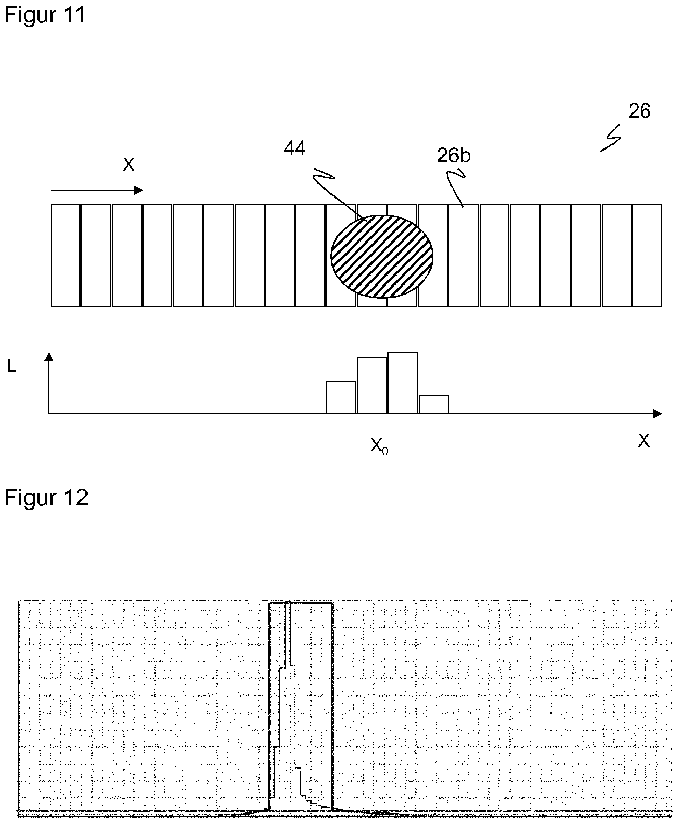

Figur 11 zeigt ein weiteres Mal die Zeilenanordnung des Lichtempfängers 26 und darunter die entsprechende Ortsverteilung L(X) der Empfangspegel. Der Empfangspegel aus Histogrammen zu Lichtempfangselementen 26a, die nur Hintergrundlicht erreichen, wird auf Null gesetzt. L(X) ist folglich die Intensitätsverteilung, und daraus lässt sich wie herkömmlich die Position $X_0$ des Empfangslichtflecks 44 mit Subpixelgenauigkeit bestimmen, beispielsweise als Schwerpunkt oder Median.

Figur 12 zeigt nochmals die Intensitätsverteilung wie im unteren Teil der Figur 11, lediglich mit mehr Pixeln oder Lichtempfangselementen 26a in X-Richtung längs der Zeilenanordnung, nämlich nun 128. Bei einem herkömmlichen Triangulationssensor mit PN- oder PIN-Fotodioden besteht ein linearer Zusammenhang zwischen Bestrahlungsstärke und Ausgangssignal. Deshalb entsteht auch eine gestufte Intensitätsverteilung, die eine genaue Bestimmung von $X_0$ ermöglicht.

Das mit dicker Linie gezeichnete Signal entspricht einer Situation, in welcher die Auslösewahrscheinlichkeit der SPADs in der Zeilenanordnung des Lichtempfängers 26 nahe hundert Prozent liegt und sie demnach in Sättigung gehen oder Vollausschlag liefern. Das passiert aber bei SPADs relativ leicht. Es ist klar, dass damit eine subpixelgenaue Bestimmung von $X_0$ nicht mehr präzise denkbar ist. SPADs zeigen nicht den einfachen linearen Zusammenhang. Bei steigendem Hintergrundlicht stehen immer weniger SPADs zur Verfügung (Pile-Up-Effekt), und es ist geschieht relativ rasch, dass die Auslösewahrscheinlichkeit zu groß wird und dies in die ungünstige Situation des Vollausschlags mündet.

Um also auch mit SPADs ähnlich präzise zu triangulieren wie mit einem herkömmlichen Lichtempfänger, sollte die Empfindlichkeit passend eingestellt werden, damit die Auslösewahrscheinlichkeit spürbar kleiner Eins bleibt. Dafür kann die Sendeleistung des Lichtsenders 12 und/oder die Empfindlichkeit der Lichtempfangselemente 26a verändert werden. Das ist einerseits durch Anpassen der Vorspannung möglich. Alternativ können in einem Lichtempfangselement 26a mehrere Lawinenphotodiodenelemente 26b unterschiedlicher Größe verwendet werden. Durch jeweilige Auswahl aktiver Lawinenphotodiodenelemente 26b wird dann ebenfalls die Detektionswahrscheinlichkeit bei Empfang von Nutzlicht variiert.

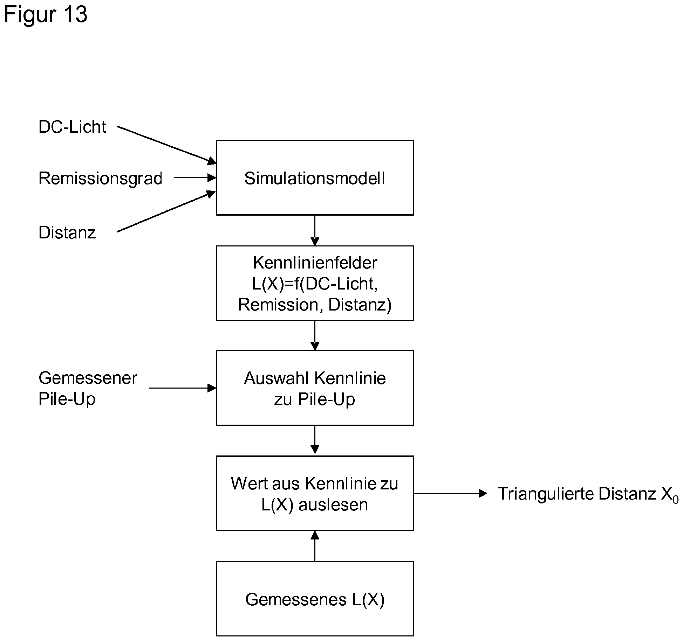

Figur 13 zeigt rein schematisch ein Ablaufdiagramm für eine Triangulation. Die Größe L(x), also die Intensitätsverteilung im Empfangslichtfleck 44, ist neben der optischen Empfangsleistung $P_{rec}(x)$ vom Hintergrundlicht, der Distanz zum Objekt und der Remission des Objektes abhängig. Das Hintergrundlicht kann aus Histogrammen oder Histogrammbereichen ohne Nutzlicht, d.h. außerhalb des lokalen Maximums 42, geschätzt werden. Der Abstand ist durch die Lichtlaufzeitmessung bekannt. Die Remission lässt sich in Kenntnis von Hintergrund und Abstand aus dem Empfangspegel schätzen, da berechnet werden kann, welcher Empfangspegel bei einem Referenzremissionsgrad von beispielsweise hundert Prozent zu erwarten wäre.

Gemäß Figur 13 fließen diese Größen Hintergrundlicht (DC-Licht), Remissionsgrad und Abstand oder Distanz in ein Simulationsmodell ein. Dabei ist es sinnvoll, L(x) nach $P_{rec}(x)$ umzurechnen, also den Einfluss des Hintergrundlichts zu eliminieren. Die Funktion P(x) = f(L(x)) kann algorithmisch oder über Kennlinienfelder ermittelt werden. Je nach gemessenem Pile-Up-Effekt wird eine zugehörige Kennlinie ausgewählt.

**Patentansprüche**

1. Optoelektronischer Sensor (10) zur Erfassung eines Objekts (20) in einem Überwachungsbereich (18) mit einem Lichtsender (12) zum Aussenden eines Lichtpulses (16), einem Lichtempfänger (26) zum Empfangen des remittierten Lichtpulses (22) mit einer Zeilenanordnung von Lichtempfangselementen (26a), die jeweils mindestens ein Lawinenphotodiodenelement (26b) aufweisen, das mit einer Vorspannung oberhalb einer Durchbruchspannung vorspannbar und somit in einem Geiger-Modus betreibbar ist, sowie mit einer Steuer- und Auswertungseinheit (28), die dafür ausgebildet ist, den Abstand zu dem Objekt (20) aus den Empfangssignalen der Lawinenphotodiodenelemente (26b) in einer ersten Abstandsmessung aus der Lichtlaufzeit zwischen Aussenden des Lichtpulses (16) und Empfangen des remittierten Lichtpulses (22) und in einer zweiten Abstandsmessung mittels Triangulation aus dem Auftreffort des remittierten Lichtpulses (22) auf der Anordnung zu bestimmen,
**dadurch gekennzeichnet,**
**dass** die Steuer- und Auswertungseinheit (28) dafür ausgebildet ist, für jeden Bereich der Zeilenanordnung eine Vielzahl von gemessenen Lichtlaufzeiten in einem jeweiligen Histogramm zu akkumulieren, wobei in den Bins eines Histogramms gezählt wird, wie oft eine Lichtlaufzeit in einem bestimmten Lichtlaufzeitbereich gemessen wurde, einen Empfangspegel je Histogramm zu bestimmen und den Auftreffort aus der Verteilung der Empfangspegel über die Histogramme zu bestimmen, und den Abstandsmessungen nur solche Histogramme und/oder Bereiche von Histogrammen zugrunde zu legen, bei denen durch erste Abstandsmessung anhand der Lichtlaufzeit und durch zweite Abstandsmessung mittels Triangulation bestimmte Abstände um höchstens eine Abstandstoleranz voneinander abweichen.

**2.** Sensor (10) nach Anspruch 1,
wobei die Steuer- und Auswertungseinheit (28) dafür ausgebildet ist, Lichtlaufzeiten mehrfach durch Messwiederholung und/oder getrennte Auswertung der Empfangssignale zu messen.

**3.** Sensor (10) nach Anspruch 1 oder 2,
wobei die Steuer- und Auswertungseinheit (28) eine Vielzahl von Lichtlaufzeitmesseinheiten (34) aufweist, die jeweils einem oder mehreren Lawinenphotodiodenelementen (26b) zugeordnet sind.

**4.** Sensor (10) nach einem der vorhergehenden Ansprüche,
wobei die Steuer- und Auswertungseinheit (28) dafür ausgebildet ist, ein Histogramm je Lichtempfangselement (26a) zu akkumulieren.

**5.** Sensor (10) nach einem der vorhergehenden Ansprüche,
wobei die Steuer- und Auswertungseinheit (28) dafür ausgebildet ist, in jedem Histogramm einen Abstandswert aus der Position des durch den remittierten Lichtpuls (22) erzeugten lokalen Maximums (42) zu bestimmen.

**6.** Sensor (10) nach einem der vorhergehenden Ansprüche,
wobei die Steuer- und Auswertungseinheit (28) dafür ausgebildet ist, gemessene Lichtlaufzeiten aus Histogrammen zu ignorieren, in denen kein lokales Maximum (42) identifiziert werden kann.

**7.** Sensor (10) nach einem der vorhergehenden Ansprüche,

wobei die Steuer- und Auswertungseinheit (42) dafür ausgebildet ist, den Empfangspegel je Histogramm durch Integrieren des durch den remittierten Lichtpuls (22) erzeugten lokalen Maximums (42)
oder durch dessen Höhe zu bestimmen.

**8.** Sensor (10) nach einem der vorhergehenden Ansprüche, wobei die Steuer- und Auswertungseinheit (28) dafür ausgebildet ist, den exponentiell fallenden Hintergrundanteil eines Histogramms auszufiltern.

**9.** Sensor (10) nach einem der vorhergehenden Ansprüche,
wobei die Steuer- und Auswertungseinheit (28) dafür ausgebildet ist, die Auslösewahrscheinlichkeit der Lawinenphotodiodenelemente (26b) bei Empfang des remittierten Lichtpulses (22) unterhalb einer Sättigung zu halten, insbesondere durch Anpassung der Sendeleistung des Lichtsenders (12) oder der Empfindlichkeit der Lawinenphotodiodenelemente (26b).

**10.** Sensor (10) nach einem der vorhergehenden Ansprüche,
wobei die Steuer- und Auswertungseinheit (28) dafür ausgebildet ist, das Remissionsvermögen des Objekts (20) zu bestimmen.

**11.** Sensor (10) nach einem der vorhergehenden Ansprüche,
wobei die Abstandstoleranz aus der erwarteten Breite des von dem remittierten Lichtpuls (22) auf der Zeilenanordnung erzeugten Empfangslichtflecks (44) bestimmt ist.

**12.** Sensor (10) nach einem der vorhergehenden Ansprüche,
wobei die Steuer- und Auswertungseinheit (28) dafür ausgebildet ist, im Fernbereich die erste Abstandsmessung und im Nahbereich die zweite Abstandsmessung stärker zu gewichten und/oder wobei die Steuer- und Auswertungseinheit (28) dafür ausgebildet ist, die Lawinenphotodiodenelemente (26b) nur während eines Zeitintervalls ab Aussenden des Lichtpulses (16) zu aktivieren.

**13.** Verfahren zur Erfassung eines Objekts (20) in einem Überwachungsbereich (18), bei dem ein Lichtpuls (16) ausgesandt und der im Überwachungsbereich (18) remittierte Lichtpuls (22) von einem Lichtempfänger (26) mit einer Zeilenanordnung von Lichtempfangselementen (26a) wieder empfangen wird, die jeweils mindestens ein Lawinenphotodiodenelement (26b) aufweisen, das mit einer Vorspannung oberhalb einer Durchbruchspannung vorgespannt und somit in einem Geiger-Modus betrieben wird, wobei der Abstand zu dem Objekt (20) aus den Empfangssignalen der Lawinenphotodiodenelemente (26b) in einer ersten Abstandsmessung aus der Lichtlaufzeit zwischen Aussenden des Lichtpulses (16) und Empfangen des remittierten Lichtpulses (22) und in einer zweiten Abstandsmessung mittels Triangulation aus dem Auftreffort des remittierten Lichtpulses (22) auf der Anordnung bestimmt wird, **dadurch gekennzeichnet,**
**dass** für jeden Bereich der Zeilenanordnung eine Vielzahl von gemessenen Lichtlaufzeiten in jeweils einem Histogramm akkumuliert wird, wobei in den Bins eines Histogramms gezählt wird, wie oft eine Lichtlaufzeit in einem bestimmten Lichtlaufzeitbereich gemessen wurde, dass ein Empfangspegel je Histogramm bestimmt wird und der Auftreffort aus der Verteilung der Empfangspegel über die Histogramme bestimmt wird, und dass den Abstandsmessungen nur solche Histogramme und/oder Bereiche von Histogrammen zugrunde gelegt werden, bei denen durch erste Abstandsmessung anhand der Lichtlaufzeit und durch zweite Abstandsmessung mittels Triangulation bestimmte Abstände um höchstens eine Abstandstoleranz voneinander abweichen.

**Claims**

1. An optoelectronic sensor (10) for detecting an object (20) in a monitoring area (18), the sensor (10) comprising a light transmitter (12) for transmitting a light pulse (16), a light receiver (26) for receiving the remitted light pulse (22) and having a line arrangement of light-receiving elements (26a) each comprising at least one avalanche photodiode element (26b) that can be biased with a bias voltage above a breakdown voltage and can thus be operated in a Geiger mode, and a control and evaluation unit (28) configured to determine the distance to the object (20) from the received signals of the avalanche photodiode elements (26b) in a first distance measurement from the light time of flight between transmission of the light pulse (16) and reception of the remitted light pulse (22) and in a second distance measurement by means of triangulation from the location of incidence of the remitted light pulse (22) on the arrangement,
characterized that the control and evaluation unit (28) is configured to accumulate a plurality of measured light times of flight in a respective histogram for each region of the line arrangement, counting in the bins of a histogram how often a light time of flight has been measured in a specific light time of flight range, to determine a reception level per histogram and to determine the location of incidence from the distribution of the reception levels over the histograms, and to base the distance measurements only on those histograms and/or regions of histograms for which distances determined by first distance measurement using the light time of flight and by second distance measurement using triangulation deviate from one another by at most a distance tolerance.

2. The sensor (10) according to claim 1, wherein the control and evaluation unit (28) is configured to measure light times of flight a plurality of times by measurement repetition and/or separate evaluation of the received signals.

3. The sensor (10) according to claim 1 or 2, wherein the control and evaluation unit (28) comprises a plurality of light time of flight measuring units (34), each being associated with one or more avalanche photodiode elements (26b).

4. The sensor (10) according to any of the preceding claims, wherein the control and evaluation unit (28) is configured to accumulate a histogram per light receiving element (26a).

5. The sensor (10) according to any of the preceding claims, wherein the control and evaluation unit (28) is configured to determine in each histogram a distance value from the position of the local maximum (42) generated by the remitted light pulse (22).

6. The sensor (10) according to any of the preceding claims, wherein the control and evaluation unit (28) is configured to ignore measured light times of flight from histograms where no local maximum (42) can be identified.

7. The sensor (10) according to any of the preceding claims, wherein the control and evaluation unit (42) is configured to determine the reception level per histogram by integrating the local maximum (42) generated by the remitted light pulse (22) or by its height.

8. The sensor (10) according to any of the preceding claims, wherein the control and evaluation unit (28) is configured to filter out the exponentially falling background portion of a histogram.

9. The sensor (10) according to any of the preceding claims, wherein the control and evaluation unit (28) is configured to keep the triggering probability of the avalanche photodiode elements (26b) upon reception of the remitted light pulse (22) below a saturation, in particular by adapting the transmission power of the light transmitter (12) or the sensitivity of the avalanche photodiode elements (26b).

10. The sensor (10) according to any of the preceding claims, wherein the control and evaluation unit (28) is configured to determine the remission capability of the object (20).

11. The sensor (10) according to any of the preceding claims, wherein the distance tolerance is determined from the expected width of the received light spot (44) generated on the line arrangement by the remitted light pulse (22).

12. The sensor (10) according to any of the preceding claims, wherein the control and evaluation unit (28) is configured to give greater weighting to the first distance measurement in the far range and to the second distance measurement in the near range and/or wherein the control and evaluation unit (28) is configured to activate the avalanche photodiode elements (26b) only during a time interval from transmission of the light pulse (16).

13. A method for detecting an object (20) in a monitoring area (18), wherein a light pulse (16) is transmitted and the remitted light pulse (22) remitted in the monitoring area (18) is received again by a light receiver (26) having a line arrangement of light-receiving elements (26a), each having at least one avalanche photodiode element (26b) that is biased with a bias voltage above a breakdown voltage and is thus operated in a Geiger mode, wherein the distance to the object (20) is determined from the received signals of the avalanche photodiode elements (26b) in a first distance measurement from the light time of flight between transmission of the light pulse (16) and reception of the remitted light pulse (22) and in a second distance measurement by means of triangulation from the location of incidence of the remitted light pulse (22) on the arrangement, **characterized in that** for each region of the line arrangement a plurality of measured light times of flight is accumulated in a respective histogram, counting in the bins of a histogram how often a light time of flight has been measured in a specific light time of flight range, **in that** a reception level is determined for each histogram and the location of incidence is determined from the distribution of the reception levels over the histograms and **in that** the distance measurements are based only on those histograms and/or regions of histograms for which distances determined by first distance measurement using light time of flight and by second distance measurement using triangulation deviate from one another by at most a distance tolerance.

## Revendications

1. Capteur optoélectronique (10) pour détecter un objet (20) dans une zone à surveiller (18), comprenant un émetteur de lumière (12) destiné à émettre une impulsion lumineuse (16), un récepteur de lumière (26) destiné à recevoir l'impulsion lumineuse renvoyée (22) et pourvu d'un agencement en lignes d'éléments récepteurs de lumière (26a) qui présentent chacun au moins un élément de photodiode à avalanche (26b) qui peut être polarisé avec une tension de polarisation supérieure à une tension de claquage et peut ainsi fonctionner en mode Geiger, et comprenant une unité de commande et d'évaluation (28) qui est réalisée pour déterminer la distance à l'objet (20) à partir des signaux de réception des éléments de photodiode à avalanche (26b) lors d'une première mesure de distance à partir du temps de vol de lumière entre l'émission de l'impulsion lumineuse (16) et la réception de l'impulsion lumineuse renvoyée (22) et lors d'une seconde mesure de distance par triangulation à partir du lieu d'impact de l'impulsion lumineuse renvoyée (22) sur ledit agencement, **caractérisé en ce que** l'unité de commande et d'évaluation (28) est réalisée pour accumuler dans un histogramme respectif une pluralité de temps de vol de lumière mesurés pour chaque zone de l'agencement en lignes, les classes d'un histogramme permettant de compter le nombre de fois qu'un temps de vol de lumière a été mesuré dans une plage déterminée du temps de vol de lumière, pour déterminer un niveau de réception par histogramme, et pour déterminer le lieu d'impact à partir de la répartition des niveaux de réception sur les histogrammes, et pour ne prendre comme base, lors des mesures de distance, que ceux des histogrammes et/ou celles des zones d'histogramme dans lesquel(le)s les distances, déterminées par la première mesure de distance à l'aide du temps de vol de lumière et par la seconde mesure de distance à l'aide de la triangulation, diffèrent l'une de l'autre au maximum d'une tolérance de distance.

2. Capteur (10) selon la revendication 1, dans lequel l'unité de commande et d'évaluation (28) est réalisée pour mesurer plusieurs fois les temps de vol de lumière en répétant la mesure et/ou en évaluant séparément les signaux de réception.

3. Capteur (10) selon la revendication 1 ou 2, dans lequel l'unité de commande et d'évaluation (28) comprend une pluralité d'unités de mesure du temps de vol de lumière (34), chacune étant associée à un ou à plusieurs éléments de photodiode à avalanche (26b).

4. Capteur (10) selon l'une des revendications précédentes, dans lequel l'unité de commande et d'évaluation (28) est réalisée pour accumuler un histogramme par élément récepteur de lumière (26a).

5. Capteur (10) selon l'une des revendications précédentes, dans lequel l'unité de commande et d'évaluation (28) est réalisée pour déterminer dans chaque histogramme une valeur de distance à partir de la position du maximum local (42) généré par l'impulsion lumineuse renvoyée (22).

6. Capteur (10) selon l'une des revendications précédentes dans lequel l'unité de commande et d'évaluation (28) est réalisée pour ignorer les temps de vol de lumière mesurés dans les histogrammes dans lesquels aucun maximum local (42) ne peut être identifié.

7. Capteur (10) selon l'une des revendications précédentes,

dans lequel l'unité de commande et d'évaluation (42) est réalisée pour déterminer le niveau de réception par histogramme en intégrant le maximum local (42) généré par l'impulsion lumineuse renvoyée (22) ou en considérant son niveau.

8. Capteur (10) selon l'une des revendications précédentes,
dans lequel l'unité de commande et d'évaluation (28) est réalisée pour filtrer la part de l'arrière-plan d'un histogramme, laquelle décroît de manière exponentielle.

9. Capteur (10) selon l'une des revendications précédentes,
dans lequel l'unité de commande et d'évaluation (28) est réalisée pour maintenir en dessous d'une saturation la probabilité de déclenchement des éléments de photodiode à avalanche (26b) lors de la réception de l'impulsion lumineuse renvoyée (22), en particulier en adaptant la puissance d'émission de l'émetteur de lumière (12) ou la sensibilité des éléments de photodiode à avalanche (26b).

10. Capteur (10) selon l'une des revendications précédentes,
dans lequel l'unité de commande et d'évaluation (28) est réalisée pour déterminer la capacité de renvoi de l'objet (20).

11. Capteur (10) selon l'une des revendications précédentes,
dans lequel la tolérance de distance est déterminée à partir de la largeur attendue du spot lumineux de réception (44) généré par l'impulsion lumineuse renvoyée (22) sur l'agencement en lignes.

12. Capteur (10) selon l'une des revendications précédentes,
dans lequel l'unité de commande et d'évaluation (28) est réalisée pour pondérer plus fortement la première mesure de distance dans la zone lointaine et la deuxième mesure de distance dans la zone proche, et/ou l'unité de commande et d'évaluation (28) est réalisée pour activer les éléments de photodiode à avalanche (26b) uniquement pendant un intervalle de temps à partir de l'émission de l'impulsion lumineuse (16).

13. Procédé de détection d'un objet (20) dans une zone à surveiller (18), dans lequel une impulsion lumineuse (16) est émise et l'impulsion lumineuse (22) renvoyée de la zone à surveiller (18) est reçue par un récepteur de lumière (26) ayant un agencement en lignes d'éléments récepteurs de lumière (26a) qui présentent chacun au moins un élément de photodiode à avalanche (26b) qui est polarisé avec une tension de polarisation supérieure à une tension de claquage et qui fonctionne ainsi en mode Geiger, la distance à l'objet (20) étant déterminée à partir des signaux de réception des éléments de photodiode à avalanche (26b) lors d'une première mesure de distance à partir du temps de vol de lumière entre l'émission de l'impulsion lumineuse (16) et la réception de l'impulsion lumineuse renvoyée (22), et lors d'une seconde mesure de distance par triangulation à partir du lieu d'impact de l'impulsion lumineuse renvoyée (22) sur ledit agencement,
**caractérisé en ce que**
pour chaque zone de l'agencement de lignes, une pluralité de temps de vol de lumière mesurés est accumulée dans un histogramme respectif, les classes d'un histogramme permettant de compter le nombre de fois qu'un temps de vol de lumière a été mesuré dans une plage déterminée du temps de vol de lumière, **en ce qu'**un niveau de réception est déterminé par histogramme, et le lieu d'impact est déterminé à partir de la répartition des niveaux de réception sur les histogrammes, et **en ce que**, lors des mesures de distance, uniquement ceux des histogrammes et/ou celles des zones d'histogramme sont pris(es) comme base, dans lesquel(le)s les distances, déterminées par la première mesure de distance à l'aide du temps de vol de lumière et par la seconde mesure de distance à l'aide de la triangulation, diffèrent l'une de l'autre au maximum d'une tolérance de distance.

Figur 1

Figur 2

LS42-18

## Figur 3

## Figur 4

Figur 5

Figur 6

Figur 7

Figur 8

# Figur 9

# Figur 10

Figur 11

Figur 12

# Figur 13

DC-Licht

Remissionsgrad

Distanz

```
┌─────────────────────┐
│  Simulationsmodell  │
└─────────────────────┘
           │
           ▼
┌─────────────────────┐
│   Kennlinienfelder  │
│   L(X)=f(DC-Licht,  │
│  Remission, Distanz)│
└─────────────────────┘
           │
           ▼
```

Gemessener
Pile-Up

```
┌─────────────────────┐
│  Auswahl Kennlinie  │
│     zu Pile-Up      │
└─────────────────────┘
           │
           ▼
┌─────────────────────┐
│ Wert aus Kennlinie zu│──────▶ Triangulierte Distanz $X_0$
│   L(X) auslesen     │
└─────────────────────┘
           ▲
           │
┌─────────────────────┐
│   Gemessenes L(X)   │
└─────────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 201717811 A1
- DE 102011005740 A1
- DE 102004037137 B4
- EP 2159603 B1
- DE 102004042466 A1
- EP 3388865 A1
- WO 2018160886 A1
- US 20180209846 A1
- EP 2711667 A1

**In der Beschreibung aufgeführte Nicht-Patentliteratur**

- 185 MHz count rate, 139 dB dynamic range singlephoton avalanche diode with active quenching circuit in 130 nm CMOS technology. **EISELE, ANDREAS et al.** Int. Image Sensor Workshop (IISW). Onuma, 2011
- **HALLMAN, LAURI et al.** On 2-D Rangefinding Using a~ 1 nJ/~ 100 ps Laser Diode Transmitter and a CMOS SPAD Matrix. *IEEE Photonics Journal,* 2018